Europäisches Patentamt

**European Patent Office**

Office européen des brevets

(11) Veröffentlichungsnummer: **0 017 156**
.B1

(12) **EUROPÄISCHE PATENTSCHRIFT**

(45) Veröffentlichungstag der Patentschrift:
12.10.83

(51) Int. Cl.³: **F 23 D 3/40**

(21) Anmeldenummer: **80101597.5**

(22) Anmeldetag: **26.03.80**

(54) **Keramischer Brennerkopf mit zum Brennermund parallel zueinander geführten Strömungskanälen für Brennstoff und Oxidationsmittel.**

<table>
<tr><td>(30) Priorität: <b>29.03.79 DE 2912518<br>29.03.79 DE 2912517</b></td><td>(73) Patentinhaber: <b>Kernforschungsanlage Jülich<br>Gesellschaft mit beschränkter Haftung, Postfach 1913,<br>D-5170 Jülich (DE)</b></td></tr>
<tr><td>(43) Veröffentlichungstag der Anmeldung:<br><b>15.10.80 Patentblatt 80/21</b></td><td rowspan="2">(72) Erfinder: <b>Förster, Siegfried, Dr., Ottenfeld 1,<br>D-5110 Alsdorf (DE)</b><br>Erfinder: <b>Kleemann, Manfred, Dr., Im Rauland 147,<br>D-5010 Bergheim (DE)</b><br>Erfinder: <b>Quell, Peter, Dr., Birkenweg 23,<br>D-5100 Aachen-Haaren (DE)</b><br>Erfinder: <b>Sack, Berthold, Am Weissenberg 36,<br>D-5100 Aachen (DE)</b></td></tr>
<tr><td>(45) Bekanntmachung des Hinweises auf die Patenterteilung:<br><b>12.10.83 Patentblatt 83/41</b></td></tr>
<tr><td>(84) Benannte Vertragsstaaten:<br><b>AT BE CH FR GB IT LU NL SE</b></td><td></td></tr>
<tr><td>(56) Entgegenhaltungen:<br><b>AT-B-267 728<br>AT-B-271 697<br>DE-A-1 801 925<br>DE-A-2 121 543<br>DE-A-2 129 663<br>DE-B-1 551 767<br>DE-B-1 751 538<br>DE-C-357 304</b></td><td></td></tr>
</table>

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Keramischer Brennerkopf mit zum Brennermund parallel zueinander geführten Strömungskanälen für Brennstoff und Oxidationsmittel

Die Erfindung bezieht sich auf einen keramischen Brennerkopf mit zum Brennermund parallel zueinander geführten Strömungskanälen für Brennstoff und Oxidationsmittel, wobei zwischen benachbarten Strömungskanälen einem Wärmeaustausch zwischen Oxidationsmittel und Brennstoff dienende Trennwände vorgesehen sind.

Der keramische Brennerkopf ist in Industrieöfen einsetzbar, aber auch für Wärmeerzeuger kleinerer Leistung bestimmt. In der EP-A1-0 012 308 (dieses Dokument fällt unter Artikel 54 Absatz 3) wird ein Brennerkopf beschrieben, mit dem sich gasförmige, aber auch flüssige Brennstoffe verbrennen lassen, soweit durch Vorerhitzen des Oxidationsmittels der flüssige Brennstoff innerhalb der den Brennstoff führenden Strömungskanäle im Wärmeaustausch mit dem Oxidationsmittel erwärmt und vor Austritt aus dem Brennermund verdampft wird. Dabei lässt sich jedoch nicht in allen Fällen vermeiden, dass beim Verdampfen durch Crackprozesse im Brennstoff unerwünschte Rückstücke gebildet werden, die sich in den den Brennstoff führenden Strömungskanälen absetzen oder zu unerwünschten Niederschlägen im Brennraum und vom Abgas durchströmten Räumen führen.

Für flüssige Brennstoffe ist aus DE-A-2 129 663 ein Vergasungsbrenner bekannt, der einen Vergasungskörper aus porösem, wärmebeständigem Material und Einrichtungen zur Zuführung des flüssigen Brennstoffes über den Vergasungskörper zu einer Brennkammer aufweist. Die Wände des hohlzylinderförmig ausgebildeten Vergasungskörpers werden von Verbrennungsluft umspült, wobei zumindest im Innenraum des Hohlzylinders nach Zündung des gebildeten Brennstoff-Luft-Gemisches bereits ein Teil des Brennstoffes verbrennt. Die damit verbundene erhebliche Aufheizung des Vergasungskörpers begünstigt die oben bereits erwähnten Queckprozesse im Brennstoff in verstärktem Masse. Es besteht somit die Gefahr, dass sich der poröse Vergasungskörper verhältnismässig rasch mit Rückständen zusetzt.

Aufgabe der Erfindung ist es, einen zur Verbrennung flüssiger Brennstoffe geeigneten Brenner zu schaffen, der es gestattet, den Brennstoff mit einer niedrigeren Temperatur, als sie die Verbrennungsluft aufweist, mit der Verbrennungsluft zu vermischen und ein schadstoffarmes, zündfähiges Gemisch zu erzeugen, ohne dass durch Überhitzen des flüssigen Brennstoffes ein Cracken des Brennstoffs auftritt.

Diese Aufgabe wird bei einem Brennerkopf der eingangs genannten Art gemäss der Erfindung durch die in Patentanspruch 1 gekennzeichnete Ausbildung des Brennerkopfes gelöst. Danach bestehen die Trennwände zwischen den Strömungskanälen aus einem Werkstoff, der für den Brennstoff durchlässig ist. Als Werkstoffe werden beispielsweise poröse Keramiken verwendet, wie Siliciumcarbid oder Siliciumnitrit, oder Sintermetall, das als Filtermaterial bekannt ist. Die den Brennstoff führenden Strömungskanäle sind zum Brennraum hin verschlossen. In vorteilhafter Weise durchdringt der flüssige Brennstoff den porösen Werkstoff und verdunstet auf der dem Oxidationsmittelstrom zugewandten Oberfläche der Trennwände. Oxidationsmittel und Brenngas vermischen sich somit bereits vor Erreichen des Brennermundes, wobei die porösen Trennwände zu einer Filmverdunstung des Brennstoffs führen, die die Tröpfchenbildung vermeidet. Durch Regulierung der Zufuhr von Oxidationsmittel und Brennstoff, letzteres durch Einstellung des Flüssigkeitsdruckes im Strömungskanal, lassen sich auch am Brennermund austretende überstöchiometrische Brennstoff-Oxidationsmittel-Gemische einstellen.

In einer weiteren Ausgestaltung der Erfindung ist vorgesehen, die Strömungskanäle für den Brennstoff mittels den Brennermund überragenden Mundstücken aus porösem Werkstoff zu verschliessen.

Für den Kaltstart des Brennerkopfs ist am Brennermund eine quer zu den Strömungskanälen erstreckte Zündeinrichtung angeordnet, deren Merkmale in Patentanspruch 3 angegeben sind. Die Zündeinrichtung weist einen den Brennermund überragenden Verdunstungskörper für den flüssigen Brennstoff auf, in dem zur Verdunstung des Brennstoffs ein zum Brennraum hin offener Hohlraum vorgesehen ist, der von einem elektrisch erhitzbaren Zünddraht durchzogen wird. Mit Hilfe des Zünddrahtes lässt sich der verdunstende Brennstoff im Hohlraum zünden, wobei über Stichkanäle, die zu den Mündungen der Strömungskanäle geführt sind, Zündflammen schlagen, die das aus dem Brennermund ausströmende Brennstoff-Oxidationsmittel-Gemisch zünden. Es tritt eine gleichzeitige Zündung des Gemisches über der gesamten Breite des Brennermundes ein.

Eine weitere Ausbildung der Erfindung besteht darin, die Brennerköpfe in Parallelschaltung paarweise spiegelbildlich zueinander und derart anzuordnen, dass ein Brennermund neben dem anderen liegt. Es lassen sich so unter Beibehaltung fertigungstechnisch günstiger Baueinheiten auch Brenner hoher Leistung schaffen. Zweckmässig bilden die Brennerpaare hintereinander angeordnet Reihen, wobei die gewünschte Heizleistung die erforderliche Anzahl der Brennerpaare bestimmt. Die Brennerköpfe sind vorzugsweise nach Art der Wandungen von Waben angeordnet.

Die Erfindung wird anhand von Ausführungsbeispielen, die in der Zeichnung wiedergegeben sind, näher erläutert. Es zeigen im einzelnen:

Fig. 1 Brennerkopf mit porösen Trennwänden zwischen den Strömungskanälen für Brennstoff und Oxidationsmittel

Fig. 2 Brennerkopf mit porösen Mundstücken, die in den Brennstoff führenden Strömungskanälen eingesetzt sind,

Fig. 3 Zündeinrichtung,

Fig. 4–6 verschiedene Mundstückformen,

Fig. 7 spiegelbildlich zueinander angeordnete Brennerköpfe,

Fig. 8 spiegelbildlich zueinander angeordnete Brennerköpfe mit vorgeschalteten Rekuperatoren im Längsschnitt,

Fig. 9 in Reihen angeordnete Brennerpaare,

Fig. 10 wabenförmig angeordnete Brennerpaare.

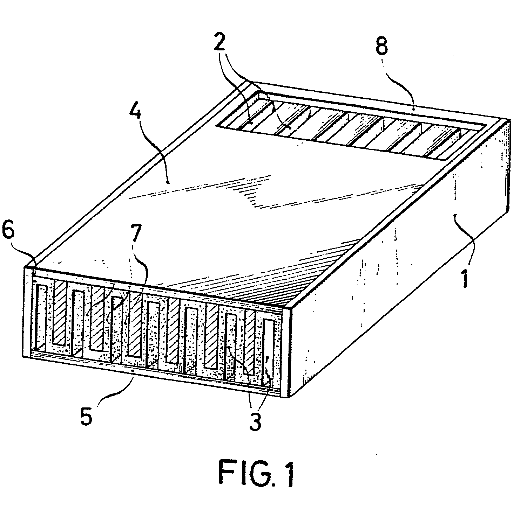

Wie aus Fig. 1 ersichtlich ist, besteht der Brennerkopf aus einem keramischen Stein 1 mit Strömungskanälen 2, 3, die in ihrer gesamten Länge von Deckwandungen 4, 5 abgedeckt sind. Die Strömungskanäle 2, 3 weisen einen gestreckten Querschnitt auf und sind in den Ausführungsbeispielen als rechteckig geformte, im Stein 1 geradlinig verlaufende, mehr als 1 mm breite Schlitze gestaltet. Die Strömungskanäle sind parallel zueinander zum Brennermund 6 geführt und paarweise gegeneinander versetzt angeordnet, wobei jeweils zwischen benachbarten Strömungskanälen eine Trennwand 7 gebildet ist. Die Wandstärke der Trennwand 7 lässt sich bis auf etwa 0,4 mm verringern. Zuströmöffnungen für die Strömungskanäle 2, 3 werden durch Absetzen der Deckwandung 4, 5 geschaffen. Die Deckwandungen werden so weit abgesetzt, dass jeweils die die benachbarten Strömungskanäle zur abzusetzenden Deckwandung hin überragenden Strömungskanäle geöffnet sind. Durch Absetzen der Deckwandung 4 werden auf diese Weise Zuströmöffnungen auf der in der perspektivischen Darstellung verdeckten Seitenfläche des Brennerkopfes angeordnet. Die Strömungskanäle 2, 3 sind an der dem Brennermund 6 entgegengesetzt liegenden Stirnseite 8 des Brennerkopfes verschlossen. In den Strömungskanälen 2 wird in den Brennerkopf flüssiger Brennstoff eingeführt, in den Strömungskanälen 3 strömt als Oxidationsmittel Luft. Die Strömungskanäle 2 sind am Brennermund 6 zum Brennraum hin verschlossen.

Die Trennwände 7 des Brennerkopfes bestehen aus einem porösen Werkstoff, der für den in den Strömungskanälen 2 geführten flüssigen Brennstoff durchlässig ist. Auf der den Strömungskanälen 3 zugewandten Oberfläche der Trennwände verdunstet flüssiger Brennstoff und mischt sich mit der in den Strömungskanälen 3 geführten Luft. Die Luft ist vorgewärmt und weist eine Temperatur auf, bei der eine zur Bildung eines zündfähigen Brennstoff-Luft-Gemisches geeignete Brennstoffmenge verdunstet. Werden als Brennstoffe Heizöle verwendet, ist eine Erwärmung der Luft auf etwa 200 °C zweckmässig. Die Verdunstung des flüssigen Brennstoffs auf der Trennwandoberfläche verhindert zugleich eine Überhitzung des flüssigen Brennstoffs in den Strömungskanälen 2 infolge wirksam werdender Verdunstungskühlung.

Zur Vorerhitzung der als Oxidationsmittel von einem in der Zeichnung nicht gesondert dargestellten Gebläse angesaugten Luft dient ein dem Brennerkopf vorgeschalteter Rekuperator, der von einem Heizmedium durchströmt wird. Vorzugsweise wird nach Inbetriebnahme des Brennerkopfes als Heizmedium aus dem Brennraum abströmendes Abgas benutzt.

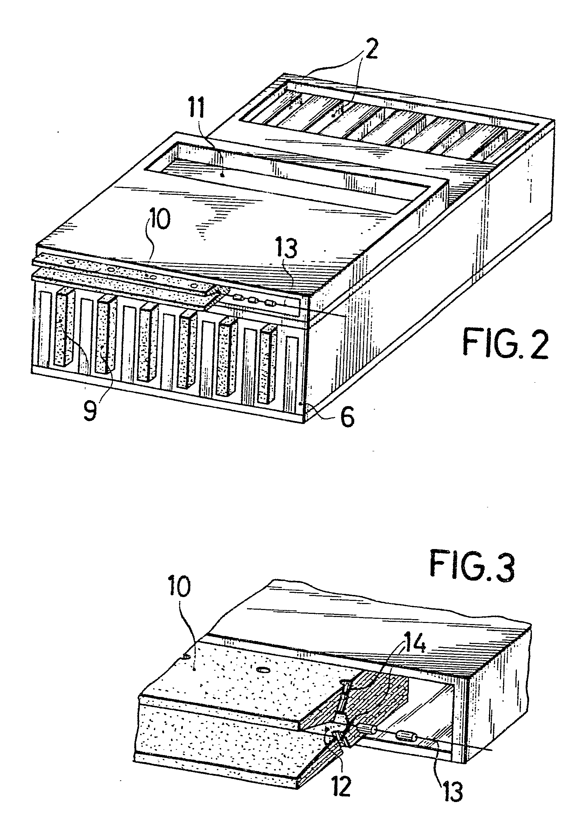

In Fig. 2 sind die Strömungskanäle 2 für Brennstoff zum Brennraum hin mittels Mundstücken 9 verschlossen, die über den Brennermund 6 hinausragen. Die Mundstücke 9 bestehen ebenfalls aus porösem, für den Brennstoff durchlässigen Werkstoff. An der Oberfläche der Mundstücke bildet sich in gleicher Weise wie an den Trennwänden 7 ein Brennstoffilm, der in die vorerhitzte Verbrennungsluft verdunstet.

Am Brennermund 6 des Brennerkopfes nach Fig. 2 ist eine über alle Strömungskanäle 2, 3 erstreckte Zündeinrichtung angeordnet, die einen Verdunstungskörper 10 aufweist, der am Ende einer Zufuhrleitung 11 für Brennstoff angeordnet ist. Im Verdunstungskörper 10 ist ein Hohlraum 12 vorgesehen, der von einem elektrisch erhitzbaren Zünddraht 13 durchzogen wird (Fig. 3). Der Zünddraht ist mit einer in Fig. 3 nicht gesondert dargestellten Stromquelle verbindbar. In den Hohlraum verdunstet der den Verdunstungskörper 10 durchdringende Brennstoff und wird durch Erwärmung auf Zündtemperatur mittels des Zünddrahtes gezündet. Die dabei entstehenden Zündflammen werden über Stichkanäle 14 zu den Mündungen der Strömungskanäle geführt und zünden dort das aus den Strömungskanälen austretende Brennstoff-Luft-Gemisch in einer vor dem Brennermund gebildeten Homogenisierungszone. Nach Einsetzen der Verbrennung des den Strömungskanälen 3 entströmenden Gemisches wird die am Zünddraht anliegende Stromquelle wieder abgeschaltet.

Im Ausführungsbeispiel sind am Verdunstungskörper 10 Stichkanäle 14 zu beiden Seitenflächen hin vorgesehen, so dass am Verdunstungskörper auf dessen gesamter Oberfläche nach der Zündung eine Verbrennung einsetzt.

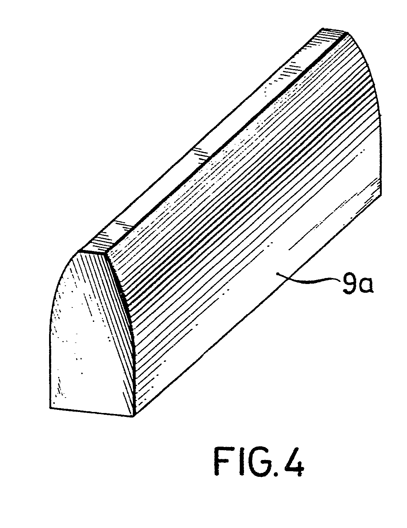

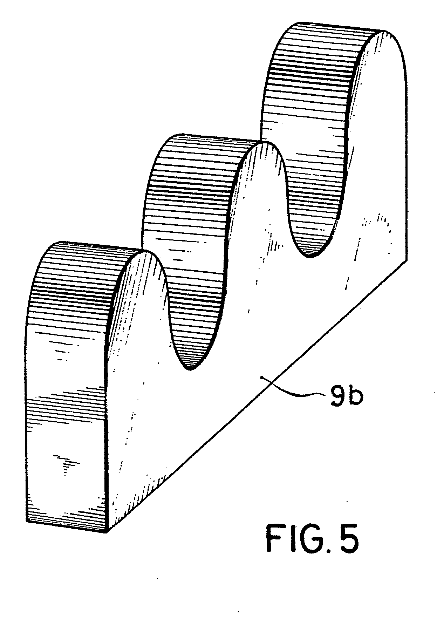

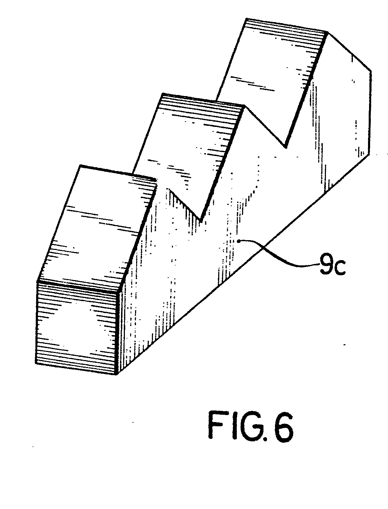

Die Form der Mundstücke 9 bestimmt die Oberfläche, die für die Verdunstung des flüssigen Brennstoffs zur Verfügung steht. Verhältnismässig grosse Oberflächen weisen in Fig. 4 bis 6 dargestellte Mundstücke 9a bis 9c auf.

Der Brennerkopf eignet sich zum Verbrennen von Heizöl unterschiedlicher Qualität. Die Filmverdunstung des flüssigen Brennstoffs erlaubt auch den Einsatz schwerer Heizöle, ohne dass durch Crackprozesse schädliche Niederschläge oder Rückstände im Brennraum entstehen. Die Brennerleistung lässt sich durch verhältnismässig geringe Druckänderungen für den flüssigen Brennstoff in einfacher Weise rasch verändern.

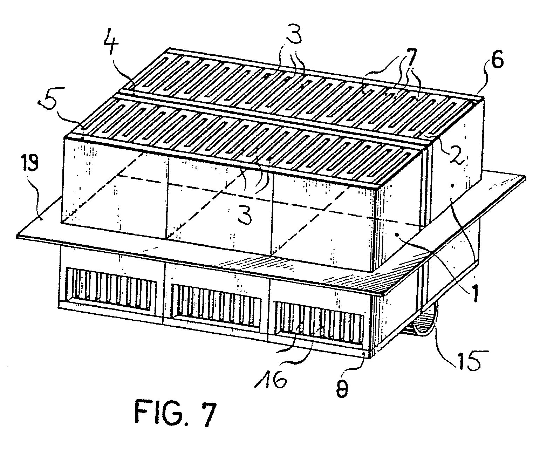

In Fig. 7 sind mehrere parallel geschaltete Brennerköpfe dargestellt. Die keramischen Steine 1 sind spiegelbildlich zueinander und derart angeordnet, dass ein Brennermund 6 neben dem anderen liegt. Der Brennstoff wird den Brennerköpfen über eine Zuführung 15 zugeführt, durch Öffnungen 16 strömt als Oxidationsmittel Luft zu.

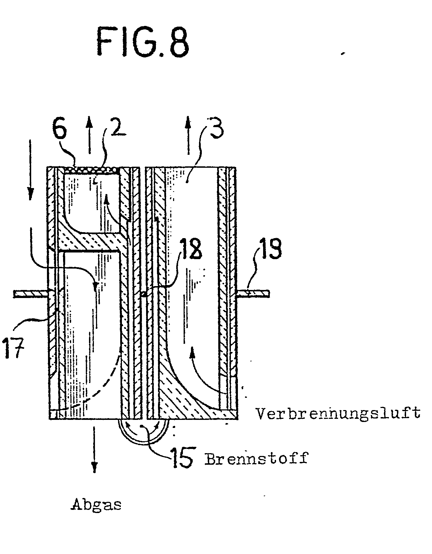

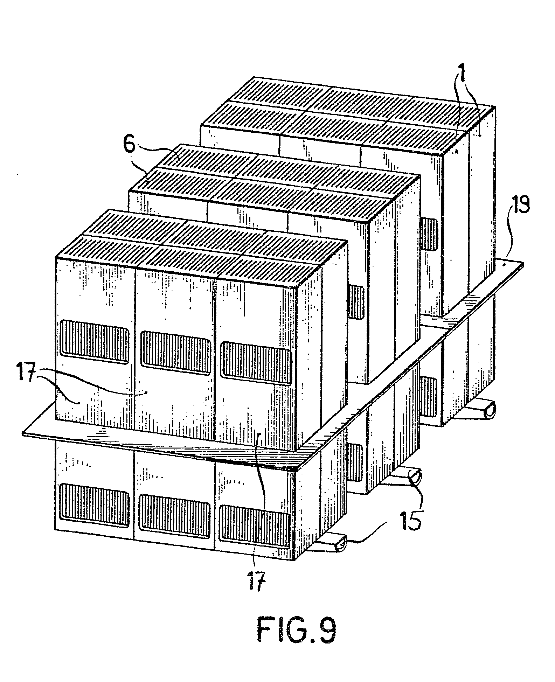

Zur Vorerhitzung der in den Brennerkopf eingeführten Verbrennungsluft ist im Ausführungsbeispiel nach Fig. 8 dem Brennerkopf ein Rekuperatorteil 17 vorgeschaltet. Als Heizmedium dient vorzugsweise aus dem Brennraum abströmendes Abgas. Das heisse Abgas durchströmt den Rekuperatorteil 17 im Gegenstrom zur Verbrennungsluft. In Fig. 9 sind mehrere Brennerköpfe mit Rekuperatorteil spiegelbildlich zueinander angeordnet. Die Brennerpaare bilden mehrere Reihen. Die Anzahl der einzelnen Brennerpaare wird von der gewünschten Gesamtleistung der Brennergruppe bestimmt. Zwischen den keramischen Steinen 1 sind jeweils Gasdichtungen 18 eingesetzt (Fig. 8). Eine Halterung 19 in den Ausführungsbeispielen nach Fig. 7 bis 9 dient zur Befestigung der Brennerköpfe und zugleich ebenfalls zur Abdichtung.

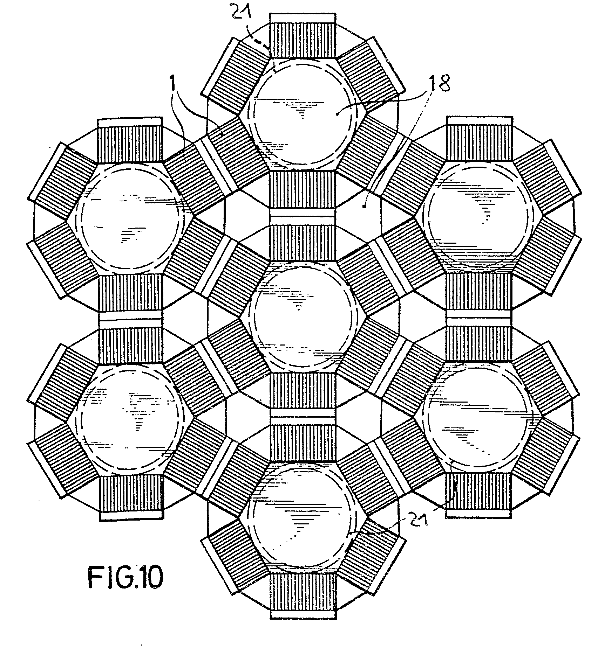

Fig. 10 zeigt wabenartig angeordnete Brennerköpfe. Die zwischen den Brennerköpfen verbleibenden Freiräume 20 werden zum Verlegen der Zuleitungen für den Brennstoff genutzt oder dienen als Kanal für das Zu- oder Ableiten von Abgas. Zwischen den Brennerköpfen sind entsprechend den Halterungen 19 nach Fig. 7 bis 9 im Ausführungsbeispiel nach Fig. 10 die Brennerpaare abstützende und abdichtende Halterungen 21 eingesetzt.

## Patentansprüche

1. Keramischer Brennerkopf mit zum Brennermund parallel zueinander geführten Strömungskanälen für Brennstoff und Oxidationsmittel, wobei zwischen benachbarten Strömungskanälen einem Wärmeaustausch zwischen Oxidationsmittel und Brennstoff dienende Trennwände vorgesehen sind, dadurch gekennzeichnet, dass die Trennwände (7) zwischen den Strömungskanälen (2, 3) für Brennstoff und Oxidationsmittel aus für den Brennstoff durchlässigem, porösem Werkstoff bestehen und dass die den Brennstoff führenden Strömungskanäle (2) zum Brennraum hin verschlossen sind.

2. Brennerkopf nach Anspruch 1, dadurch gekennzeichnet, dass die den Brennstoff führenden Strömungskanäle (2) mittels für den Brennstoff durchlässigen, porösen Mundstücken verschlossen sind, die über den Brennermund (6) hinausragen.

3. Brennerkopf nach Anspruch 1 oder 2, dadurch gekennzeichnet, dass am Brennermund (6) eine quer zu den Strömungskanälen (2, 3) erstreckte Zündeinrichtung angeordnet ist, die einen am Ende einer Zufuhrleitung (11) für flüssigen Brennstoff angeschlossenen, den Brennermund (6) überragenden, aus einem für den Brennstoff durchlässigen, porösen Werkstoff bestehenden Verdunstungskörper (10) mit einem elektrisch erhitzbaren Zünddraht (13) aufweist, der in einem zum Brennraum hin offenen Hohlraum (12) im Verdunstungskörper (10) verlegt ist, wobei der Hohlraum (12) über den Verdunstungskörper zu den Mündungen der Strömungskanäle (2, 3) am Brennermund (6) hin durchdringende Stichkanäle (14) räumlich mit einer Homogenisierungszone vor dem Brennermund (6) verbunden ist.

4. Brennerkopf nach einem der vorhergehenden Ansprüche, dadurch gekennzeichnet, dass bei Parallelschaltung ein Brennerkopf zum anderen spiegelbildlich und derart angeordnet ist, dass ein Brennermund (6) neben dem anderen liegt.

5. Brennerkopf nach Anspruch 4, dadurch gekennzeichnet, dass parallel geschaltete Brennerköpfe nach Art der Wandungen von Waben angeordnet sind.

## Claims

1. Ceramic burner head having flow ducts for fuel and oxidising agents which are taken in parallel to the mouth of the burner, and partition walls serving for heat exchange between oxidising agent and fuel are provided between neighbouring flow ducts, characterised in that the partition walls (7) between the flow ducts (2, 3) for fuel and oxidising agent consist of porous material pervious to the fuel, and that the flow ducts (2) conducting the fuel are closed to the combustion chamber.

2. Burner head according to claim 1, characterised in that the flow ducts (2) conducting the fuel are closed by means of porous fuel-pervious mouthpieces which project beyond the burner mouth (6).

3. Burner head according to claim 1 or 2, characterised in that at the burner mouth (6) there is arranged transversely to the flow ducts (2, 3) an ignition device comprising an evaporation element (10) which is connected to the end of a supply conduit (11) for liquid fuel, projects beyond the burner mouth (6), consists of a fuel-pervious porous material and has an electrically heatable ignition wire (13) which is laid in a cavity (12) in the evaporation element (10), said cavity (12) being open towards the combustion chamber and being connected spatially with a homogenising zone before the burner mouth (6) by means of takeoff ducts (14) extending through the evaporation element to the mouths of the flow ducts (2, 3) at the burner mouth (6).

4. Burner head according to one of the preceding claims, characterised in that when an in-parallel connection arrangement is used one burner head is situated in mirror-image relationship relatively to the other and is arranged such that one burner mouth (6) is situated adjacent the other.

5. Burner head according to claim 4, characterised in that burner heads connected in parallel are arranged in the manner of honeycomb walls.

## Revendications

1. Tête de brûleur céramique à canaux d'écoulement de combustible et d'agent d'oxydation dirigés vers l'orifice du brûleur en étant parallèles entre eux, des cloisons de séparation entre des canaux d'écoulement voisins servant à un échange de chaleur entre l'agent d'oxydation et le combustible, caractérisée en ce que les cloisons de séparation (7) entre les canaux d'écoulement (2, 3) pour le combustible et pour l'agent d'oxydation sont en un matériau poreux et perméable au combustible et en ce que les canaux d'écoulement (2) du combustible sont fermés vers la chambre de combustion.

2. Tête de brûleur suivant la revendication 1, caractérisée en ce que les canaux d'écoulement (2) du combustible sont fermés au moyen de pièces d'embouchures poreuses et perméables au combustible, qui dépassent l'orifice du brûleur (6).

3. Tête de brûleur suivant la revendication 1 ou 2, caractérisée en ce qu'à l'orifice du brûleur (6) est disposé un dispositif d'allumage, qui s'étend transversalement aux canaux d'écoulement (2, 3) et qui comprend un corps d'évaporation (10) en un matériau poreux et perméable au combustible, dépassant l'orifice du brûleur (6), raccordé à l'extrémité d'un conduit d'amenée (11) de combustible liquide et ayant un fil électrique d'allumage (3) qui peut être chauffé et qui est placé dans une cavité (12) du corps d'évaporation (10) ouverte vers la chambre de combustion, la cavité (12) communiquant spatialement avec une zone d'homogénéisation en avant de l'orifice du brûleur par des ajutages (14) traversant le corps d'évaporation et allant vers les embouchures des canaux d'écoulement (2, 3) sur l'orifice du brûleur (6).

4. Tête de brûleur suivant l'une des revendications précédentes, caractérisée en ce que, dans un montage en parallèle, une tête de brûleur est disposée symétriquement comme en un miroir par rapport à l'autre, de façon qu'un orifice de brûleur (6) se trouve à côté de l'autre.

5. Tête de brûleur suivant la revendication 4, caractérisée en ce que des têtes de brûleur montées en parallèle sont disposées à la manière des parois de nids d'abeilles.

FIG. 1

FIG.2

FIG.3

9a

FIG.4

9b

FIG. 5

FIG. 6

FIG. 7

# FIG.8

Verbrennungsluft

15 Brennstoff

Abgas

FIG.9

FIG.10